# EUROPEAN PATENT APPLICATION

(11) **EP 4 769 829 A1**
(43) Date of publication of application: **01.07.2026**
(21) Application number: 24876572.9
(22) Date of filing: 10.10.2024
(51) Int. Cl.: H01Q 1/32

(54) **ANTENNA ASSEMBLY, VEHICLE ROOF RACK AND VEHICLE**

(30) Priority: 10.10.2023 CN 202311306057
(71) Applicant: Fuyao Glass Industry Group Co., Ltd., Fuqing, Fujian 350300 (CN)
(72) Inventor: YU, Yusheng, Fuzhou, Fujian 350300 (CN); LIU, Rongqiang, Fuzhou, Fujian 350300 (CN); CHEN, Jiajia, Fuzhou, Fujian 350300 (CN); LIN, Hengxiao, Fuzhou, Fujian 350300 (CN); SONG, Zhengcong, Fuzhou, Fujian 350300 (CN)
(74) Representative: Patentanwälte Olbricht Buchhold Keulertz
(86) International application number: PCT/CN2024/123820
(87) International publication number: WO 2025/077760

(57) **Abstract**

Provided in the embodiments of the present disclosure are an antenna assembly (10), a vehicle roof rack and a vehicle. The antenna assembly (10) comprises an antenna, wherein the antenna comprises a closed frame (11), the frame (11) being made of an electrically conductive material; a first connecting portion (12), the first connecting portion (12) being disposed on the frame (11); and a second connecting portion (13), wherein the second connecting portion (13) is electrically connected to the first connecting portion (12) by means of a wire, and the second connecting portion (13) is configured to connect to a far-field communication device. The antenna assembly (10) of the present disclosure mounted on a vehicle roof rack comprises only the frame (11) made of an electrically conductive material and the connecting portions for electrically connecting the frame (11) to the far-field communication device, and does not have any other complex connecting members, thereby avoiding interference in the reception and transmission of electrical signals, and effectively improving the external communication performance of a vehicle.

## Description

### RELATED APPLICATION

The present disclosure claims the priority of the Chinese invention patent application with the application number 202311306057.X, which was submitted on October 10, 2023, and all the contents referring to the disclosure of said patent application serve as a part of the present disclosure.

### TECHNICAL FIELD

The present disclosure relates to the field of vehicle accessories, specifically to an antenna assembly, a vehicle roof rack and a vehicle.

### BACKGROUND

With rapid development of the Internet of Vehicles (IoV) technology, a demand for far-field communication between a vehicle itself and the outside has significantly increased. As the vehicle is in a state of continuous movement at a relatively high speed during driving, in order to ensure driving safety and use effects of IoV applications, requirements for IoV far-field communication will become higher.

In related arts, an antenna may be placed outside the vehicle, for example, mounted on a roof rack of the vehicle; or the antenna may be placed inside the vehicle, for example, placed in a roof rail, so as to perform far-field communication of the vehicle, which is described with the following examples.

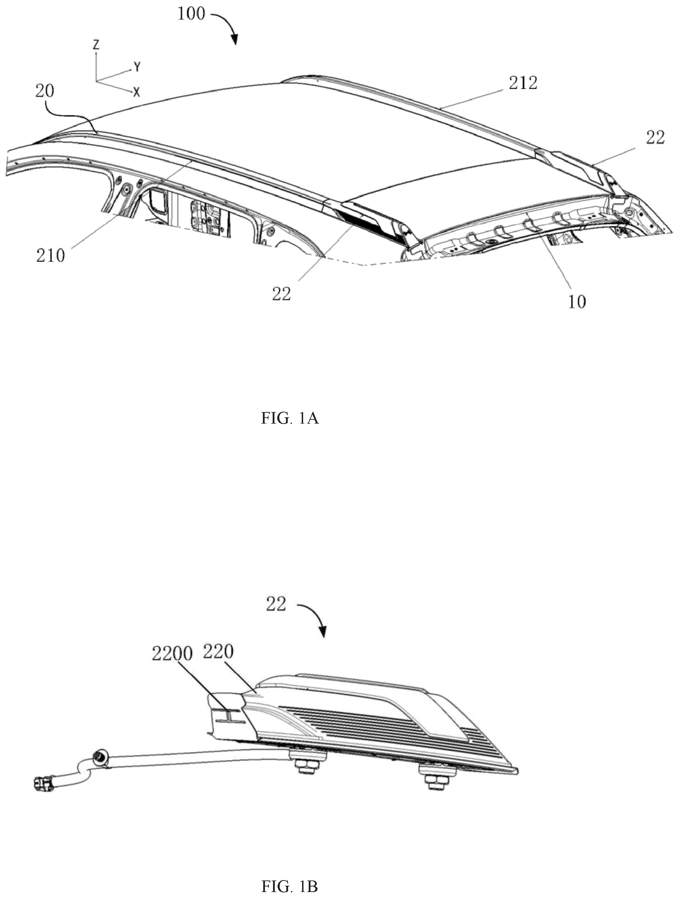

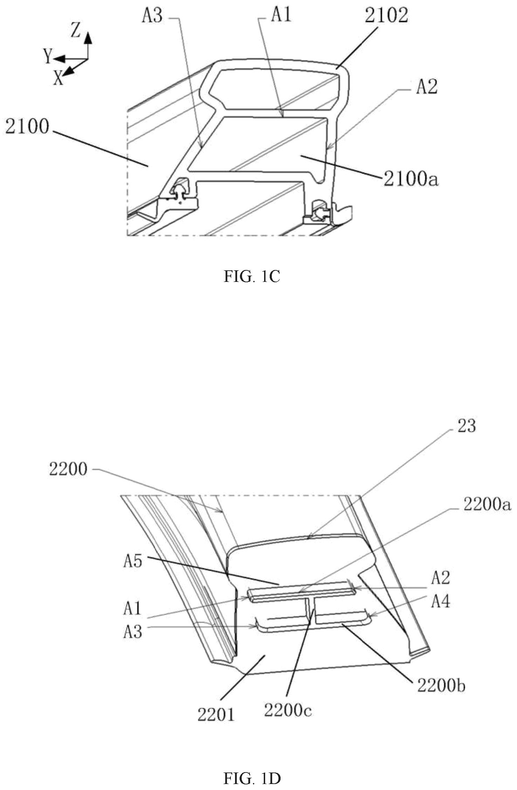

FIG. 1A, FIG. 1B, FIG. 1C and FIG. 1D are schematic diagrams of assembling an antenna and a roof rack in related arts. As shown in FIG. 1A, FIG. 1B, FIG. 1C and FIG. 1D, an antenna assembly 22 comprises a housing 220 and internal components (not shown) accommodated in the housing 220. A first roof bar 210 comprises a pipe body portion 2100 provided at an end portion, and the housing 220 comprises a coupling portion 2200 inserted into the pipe body portion 2100; the first roof bar 210 comprises an engaging face facing the housing 220 and connected to the housing 220, in which the coupling portion 2200 and the pipe body portion 2100 coordinate with a limit fit in two directions crossing with each other, to keep the antenna assembly 22 straight relative to the first roof bar 210, thereby achieving good coupling between the antenna assembly 22 and the first roof bar 210.

The inventor has found that in the above solution, although a coupling effect in which the roof bar and the antenna assembly are cross-plugged with each other is achieved via the coupling portion, members for achieving the coupling in this solution are relatively complex. In addition, such complex structure will have an adverse effect on a communication effect of the antenna itself, which is not conducive to improving a far-field communication effect of the vehicle.

### SUMMARY

To solve at least one of the above problems or similar problems, the present disclosure provides an antenna assembly, a vehicle roof rack and a vehicle, a structure thereof is simple. Moreover, an external communication effect of the vehicle can also be effectively improved.

According to an aspect of the embodiments of the present disclosure, an antenna assembly is provided, the antenna assembly comprising:
an antenna comprising a frame which is closed and made of an electrically conductive material;
a first connecting portion disposed on the frame; and
a second connecting portion being electrically connected to the first connecting portion by means of a wire, and being configured to connect to a far-field communication device.

Further, a groove is provided on the frame.

Further, the antenna assembly further comprises a mounting portion disposed on a bottom surface of the frame, and a through hole through which the wire is able to pass is disposed on the mounting portion.

Further, the antenna assembly further comprises a wire rail, and the wire rail is provided on an inner wall of the frame in an inward-outward direction, and the wire is housed in the wire rail.

Further, the antenna assembly further comprises at least one adjusting portion disposed on the frame and made of an electrically conductive material, so as to adjust an impedance of the frame.

Further, the adjusting portion is a boss.

Further, the antenna assembly further comprises a cover plate comprising a connecting portion that is fixedly connected to the adjusting portion and being configured to cover the frame.

Further, the antenna assembly further comprises:
a third connecting portion disposed on the frame;
a cover plate comprising a fourth connecting portion that is connected to the third connecting portion and being configured to cover the frame.

Further, the cover plate covers a portion of the frame close to an inner side.

According to another aspect of the embodiments of the present disclosure, a vehicle roof rack is provided, and the vehicle roof rack comprises a roof bar and antenna assemblies disposed on the roof bar, and the antenna assemblies comprise at least one antenna assembly as described above.

Further, the number of the antenna assemblies is greater than 1;
a spacing distance between two adjacent antenna assemblies is greater than a length of the frame of the antenna assemblies.

Further, the number of the antenna assemblies is two, and the antenna assemblies are disposed at both ends of the roof bar, respectively.

Further, the roof bar is made of the same electrically conductive material as the frame of the antenna assemblies, and the roof bar is integrally formed with the frame or connected to the frame by metal welding.

Further, a far-field communication device is built-in the roof bar, and the second connecting portions of the antenna assemblies are electrically connected to the far-field communication device.

According to another aspect of the embodiments of the present disclosure, a vehicle is provided and the vehicle has the vehicle roof rack as described above.

An advantageous effect of the present application lies in that the antenna assembly comprises the frame made of an electrically conductive material and the electrical connecting portion disposed on the frame, so as to connect to a far-field communication device via the electrical connecting portion, a wire and an electrical connecting portion connected to the wire, without other complex connecting members. In addition, due to a simple structure, interference in transmission and reception of an electrical signal may also be avoided, effectively improving an external communication effect of the vehicle.

Referring to the later description and drawings, specific implementations of the present application are disclosed in detail, indicating a manner that the principle of the present application can be adopted. It should be understood that the scopes of implementations of the present application are not limited. Within the spirit and scopes of the terms of the appended claims, the implementations of the present application include many changes, modifications and equivalents.

### BRIEF DESCRIPTION OF DRAWINGS

In order to describe the technical solution in the embodiments of the present disclosure or in the related arts more clearly, the drawings required for use in the embodiments or the related arts are briefly introduced below. Obviously, the drawings in the following description are some embodiments of the present disclosure. Persons skilled in the art may further obtain other drawings based on these drawings under the premise that they do not pay inventive labor.
FIG. 1A is a structural schematic diagram when an antenna assembly is connected to a roof rack in related arts;
FIG. 1B is a structural schematic diagram for an antenna assembly in related arts;
FIG. 1C is a structural schematic diagram for a position where an antenna assembly is connected to a roof rack in related arts;
FIG. 1D is a structural schematic diagram for a coupling portion in related arts;
FIG. 2 is a structural schematic diagram for an antenna assembly in Embodiment 1 in the present application;
FIG. 3 is another structural schematic diagram for an antenna assembly in Embodiment 1 in the present application;
FIG. 4 is a structural schematic diagram for a groove in Embodiment 1 in the present application;
FIG. 5 is a first structural schematic diagram for an adjusting portion in Embodiment 1 in the present application;
FIG. 6 is a second structural schematic diagram for an adjusting portion in Embodiment 1 in the present application;
FIG. 7 is a third structural schematic diagram for an adjusting portion in Embodiment 1 in the present application;
FIG. 8 is a schematic diagram in which an adjusting portion is fixedly connected to a cover plate in Embodiment 1 in the present application;
FIG. 9 is another schematic diagram in which an adjusting portion is fixedly connected to a cover plate in Embodiment 1 in the present application;
FIG. 10 is a structural schematic diagram for a mounting portion provided with a through hole in Embodiment 1 in the present application;
FIG. 11 is a wiring schematic diagram for a mounting portion in Embodiment 1 in the present application;
FIG. 12 is a first structural schematic diagram for a vehicle roof rack in Embodiment 2 in the present application;
FIG. 13 is a second structural schematic diagram for a vehicle roof rack in Embodiment 2 in the present application;
FIG. 14 is a third structural schematic diagram for a vehicle roof rack in Embodiment 2 in the present application;
FIG. 15 is a structural schematic diagram for a structure in which a roof of a vehicle is fixedly connected to a roof rack in Embodiment 3 in the present application;
FIG. 16 is a schematic diagram in which a roof of a vehicle is fixedly connected to a roof rack in Embodiment 3 in the present application.

### DESCRIPTION OF EMBODIMENTS

In order to make those skilled in the art better understand the technical solutions of the present disclosure, the technical solutions in the embodiments of the present disclosure will be described clearly and completely below with reference to the drawings in the embodiments of the present disclosure. Obviously, the described embodiments are only some embodiments of the present disclosure, not all embodiments. Based on the embodiments of the present disclosure, all other embodiments obtained by those skilled in the art without paying inventive labor should fall into the scope protected by the present disclosure.

### Embodiment 1

The embodiments in the present application provide an antenna assembly.

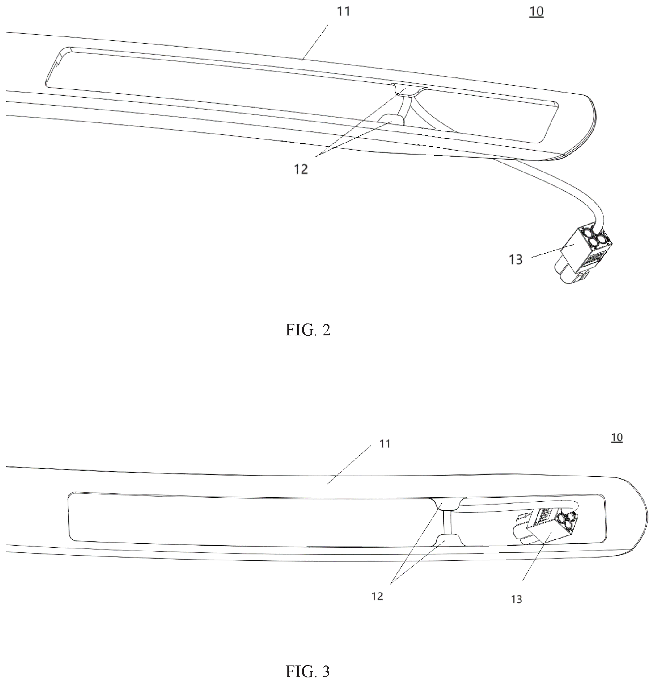

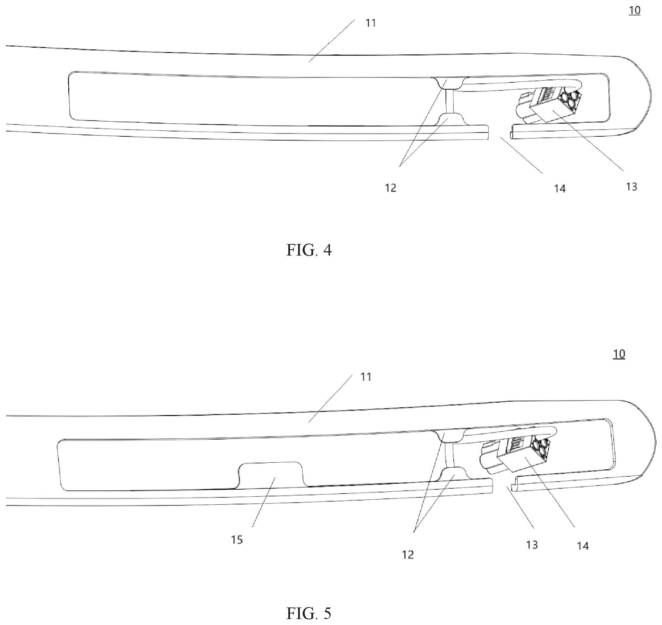

FIG. 2 is a structural schematic diagram for an antenna assembly in Embodiment 1 in the present application. FIG. 3 is another structural schematic diagram for an antenna assembly in Embodiment 1 in the present application. FIG. 4 is a structural schematic diagram for a groove in Embodiment 1 in the present application.

As shown in FIG. 2 to FIG. 3, an antenna assembly 10 comprises:
an antenna comprising a frame 11 which is closed and made of an electrically conductive material;
a first connecting portion 12 disposed on the frame 11; and
a second connecting portion 13 electrically connected to the first connecting portion 12 by means of a wire, and being configured to connect to a far-field communication device (not shown in the drawings).

In this embodiment, by using the frame 11, which is closed and made of an electrically conductive material, of the antenna assembly 10, the frame 11 serves as a communication antenna, thereby a far-field communication function such as 5G communication can be achieved through a simple structure. In addition, due to the simple structure, interference in transmission and reception of an electrical signal may further be avoided, effectively improving an external communication effect of a vehicle.

In this embodiment, the shape of the closed frame 11 is not restricted, may be set according to an actual situation, and is subject to being able to achieve a communication function. Moreover, in a scenario of achieving far-field communication in the Internet of Vehicles, the antenna assembly 10 may be mounted on a vehicle roof rack, and an appearance of the frame 11 may be determined according to a shape of a roof bar 20. In addition, the antenna assembly 10 may serve as a constituent part of the roof bar 20, no further elaboration is provided here.

In this embodiment, the material of the frame 11 may be an electrically conductive metal, such as silver, copper, gold, aluminium, zinc and their alloy materials. When the antenna assembly 10 in this embodiment is disposed on the vehicle, the material of the frame 11 is preferred to be an aluminum alloy material. The frame 11 may be fabricated using any existing technology, for example, by integrally milling a metal module. The manufacturing method is simple. The structure is simple, because it does not have too many fixed components or connection components as in related arts (such as background arts), it has a better communication effect.

In this embodiment, as shown in FIG. 2 and FIG. 3, a first connecting portion 12 is electrically connected to the frame 11, and the frame 11 (i.e., an antenna), which serves as an antenna pattern, is electrically connected to a second connecting portion 13 by means of a wire. The first connecting portion 12 may be called a feed point.

In this embodiment, the first connecting portion 12 may be disposed at any position on the frame 11 as long as the electrical connection is achieved. For example, the first connecting portion 12 may be disposed on an inner wall or an outer wall of the frame 11, or on a side face of the frame 11. It may be set according to an actual situation. For example, as shown in FIG. 2, the first connecting portion 12 is disposed on the inner wall of the frame 11.

In this embodiment, the number of the first connecting portions 12 may be arbitrary, preferably two, or more than two. Correspondingly, the number of wires connected to the first connecting portions 12 should also be set adaptively. For example, as shown in FIG. 2, the number of the first connecting portions 12 is two.

In this embodiment, the first connecting portion 12 may be disposed on the frame 11 in any way to achieve electrical connection. For example, the first connecting portion 12 may be a welding point formed by metal welding, that is, it may be disposed on the frame 11 by welding, as shown in FIG. 2 and FIG. 3. Moreover, it may be disposed on the frame 11 by using other existing methods (such as metal integral molding or electrical connection through a plug), no further elaboration is provided here.

In this embodiment, the second connecting portion 13 may be electrically connected to the first connecting portion 12 by means of a wire. For example, the second connecting portion 13 may be an interface that can be connected to a wire, and the interface may be connected to a far-field communication device, as shown in FIG. 2, the second connecting portion 13 may be a wire harness connector with one end of the wire harness (i.e., the wires) being connected to the first connecting portion 12 and the other end of the wire harness being connected to the interface.

In this embodiment, when the second connecting portion 13 is a wire harness connector, the number of wires in the wire harness may be set according to the number of the first connecting portions 12. For example, the number of wires is consistent with the number of the first connecting portions 12 disposed on the frame 11.

FIG. 4 is a structural schematic diagram for a groove 14 in Embodiment 1 in the present application. As shown in FIG. 4, the antenna assembly 10 further comprises a groove 14 disposed on the frame 11. For example, the groove 14 may be a notch that runs through the frame 11 from top to bottom, so that the frame 11 is no longer closed, the position of the notch may be at an edge of the frame 11.

Since the shape of the frame 11 is the antenna pattern, by providing at least one notch, a problem of requiring a large-area antenna pattern in related arts is adjusted to the one that only half of the original antenna pattern area is required. Its technical principle is that the frame 11 used as an antenna pattern is equivalent to an electromagnetic wave transmission line, guiding the energy of electromagnetic waves from one end to the other end. Therefore, based on a transmission line theory, the frame 11 in this embodiment also has conjugate matching due to signal reflection. With respect thereto, the design of the groove 14 (i.e., a notch provided along the edge of the frame 11) in this embodiment can eliminate signal reflection on the transmission line, that is, the groove 14 is equivalent to a short-circuit wire with half of the area of the original completely closed frame 11. Therefore, on the basis of ensuring the original antenna communication effect, the area of the original antenna pattern in related arts can be reduced by half, thereby making the antenna assembly 10 in this embodiment more applicable.

In this embodiment, since the position of the notch does not affect the technical effect of reducing the antenna pattern, the notch may be provided at any position of the frame 11, which may be determined according to an actual situation. No more description is elaborated here.

In this embodiment, the number of the grooves 14 may be arbitrary, preferably one, or two or more, and the setting position is also arbitrary.

In this embodiment, when two or more grooves 14 are provided on the same frame 11, it is equivalent to dividing the frame 11 into a plurality of sub-frame 11 structures. In this way, the same first connecting portion 12 and second connecting portion 13 should also be disposed on each sub-frame 11 structure. In this case, to enhance the communication effect, the first connecting portion 12 may be disposed as close as possible to the groove 14, thereby being able to improve a problem of impedance mismatch.

The first connecting portion 12 in this embodiment can further be disposed on different two sides of the groove 14, it is best to be as close as possible to the groove 14.

It is understandable that in this embodiment, the antenna assembly 10 is mostly mounted in an open environment in order to improve a far-field communication effect. Therefore, in order to protect its internal members and to avoid a problem of deterioration and corrosion caused by water ingress due to rain or expose to the weather, a cover plate 16 needs to be provided to the top surface of the frame 11 for protection in this embodiment. To facilitate fixation of the cover plate 16, a limit structure that matches the cover plate 16 may be disposed.

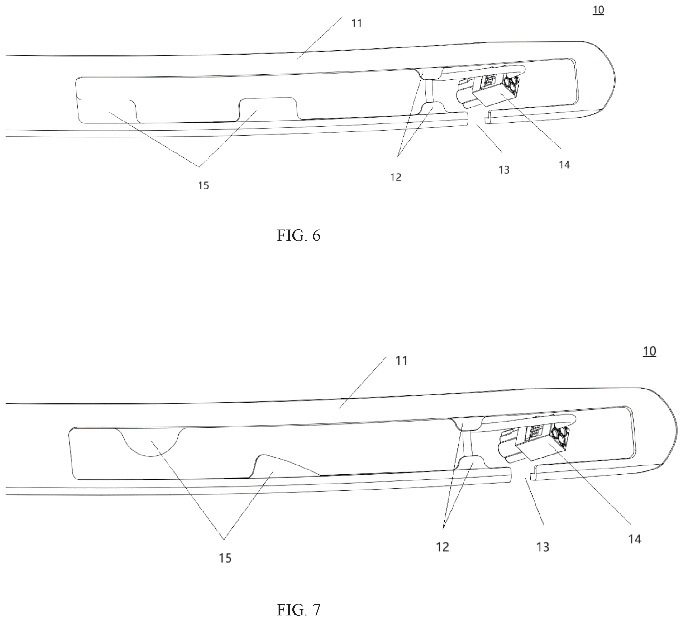

FIG. 5 is a first structural schematic diagram for an adjusting portion 15 in Embodiment 1 in the present application; FIG. 6 is a second structural schematic diagram for an adjusting portion 15 in Embodiment 1 in the present application; FIG. 7 is a third structural schematic diagram for an adjusting portion 15 in Embodiment 1 in the present application.

As shown in FIG. 5, in this embodiment, the antenna assembly 10 further comprises at least one adjusting portion 15 disposed on the frame 11 and made of an electrically conductive material, so as to adjust an impedance of the frame 11.

In this embodiment, the adjusting portion 15 may be disposed on an inner wall or outer wall of the frame 11. As shown in FIG. 5, the adjusting portion is disposed on the inner wall of the frame 11. In addition, the electrically conductive material for making the adjusting portion 15 may be gold, silver, copper, zinc, aluminum and alloys thereof.

In this embodiment, the shape of the adjusting portion 15 may be arbitrary and set according to an actual situation. For example, the adjusting portion 15 is cylindrical, such as a boss in this embodiment. The cross-sectional shape of the boss may be rectangular, because adopting a rectangular cross-section will enable the boss to have better impedance adjustment performance.

In this embodiment, the number of the adjusting portions 15 is not limited to one. As shown in FIG. 6, this number may be two or more, and may be set according to an actual situation.

In this embodiment, as shown in FIG. 7, the adjusting portion 15 is a boss, whose cross-sectional shape is arbitrary, for example, rectangular, square, circular, elliptical, etc.

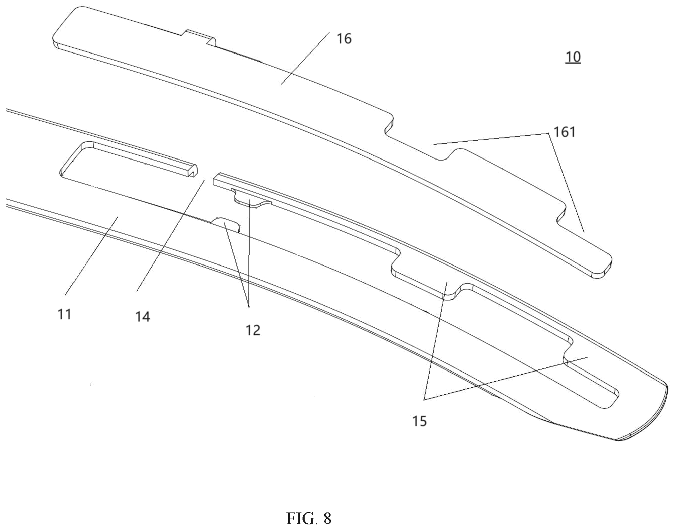

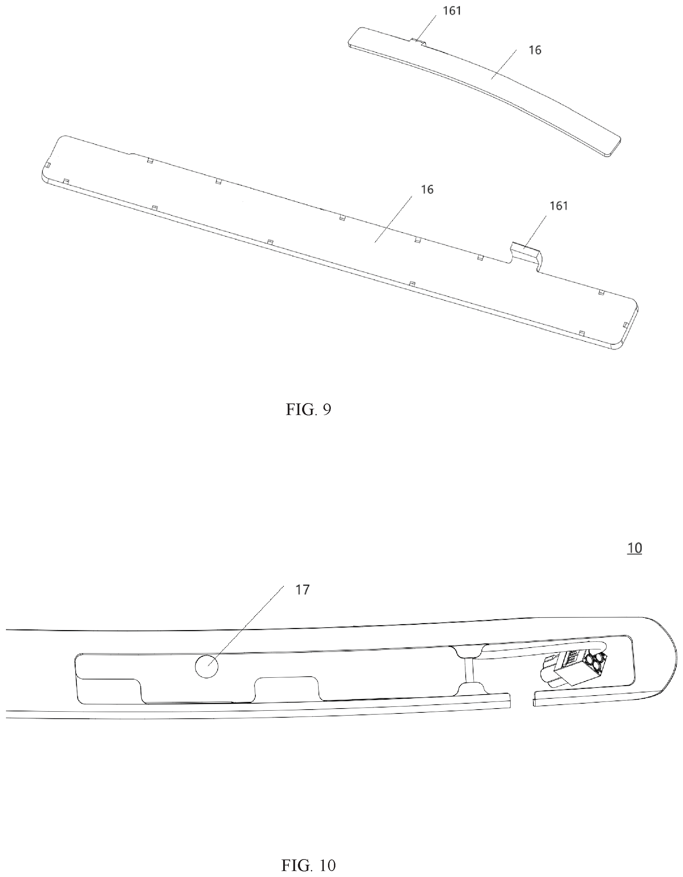

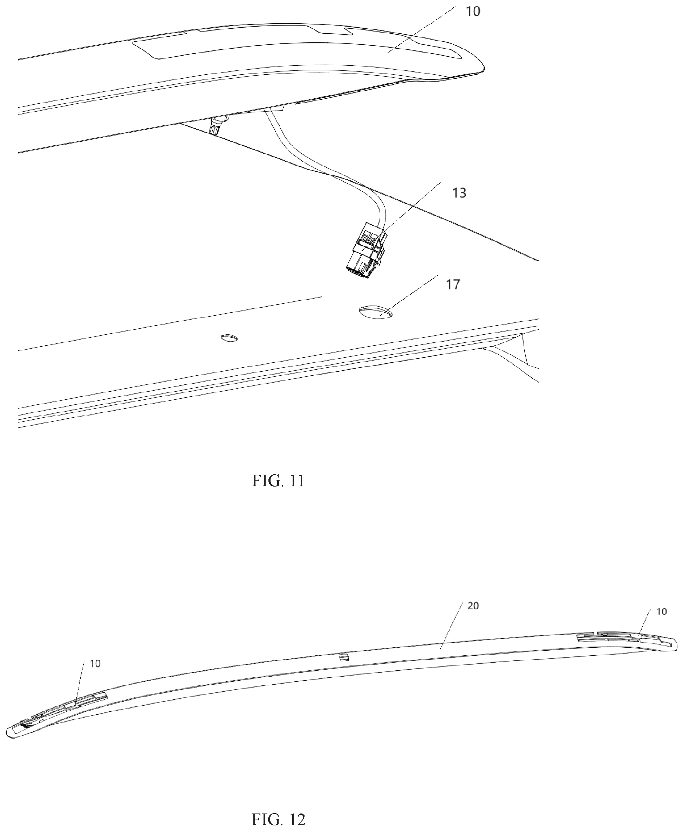

FIG. 8 is a schematic diagram in which an adjusting portion 15 is fixedly connected to a cover plate 16 in Embodiment 1 in the present application; FIG. 9 is another schematic diagram in which an adjusting portion is fixedly connected to a cover plate in Embodiment 1 in the present application; FIG. 10 is a structural schematic diagram for a mounting portion 17 provided with a through hole in Embodiment 1 in the present application; FIG. 11 is a wiring schematic diagram for a mounting portion 17 in Embodiment 1 in the present application.

As shown in FIG. 8, the antenna assembly 10 further comprises a cover plate 16 comprising a connecting portion 161 that is snap-fit connected to the adjusting portion15, for covering the frame 11. In this way, an internal structure of the antenna assembly 10 may be protected by the cover plate 16. Moreover, the adjusting portion 15 disposed on the frame 11 to adjust an impedance also simultaneously serves as a fixing portion for fixing the cover plate 16. For example, the cover plate 16 is limited in an up-down direction via the adjusting portion 15, so as to fix the cover plate on the frame 11 and cover the frame 11. The "up-down direction" is the same as the mounting direction of the cover plate 16 on the frame 11.

It is understandable that the cover plate 16 is configured to cover the frame 11, this coverage may be coverage only for a hollow part of the frame 11 or full coverage for the main body of the frame 11 and a hollow part therein.

In this embodiment, the cover plate 16 is snap-fit connected to the adjusting portion 15 by disposing the connecting portion 161. Meanwhile, the connecting portion 161 of the cover plate 16, which is fixedly connected to the adjusting portion 15, may further be fixedly connected to the adjusting portion 15 in various ways. For example, the shape of the connecting portion 161 is adapted to the adjusting portion 15. For example, when the adjusting portion 15 is a protruding structure disposed at the bottom of the frame 11, the connecting portion 161 may be a recess corresponding to the protruding structure. In this way, through corresponding snap-fit between the connecting portion 161 and the adjusting portion 15, fixation of the cover plate 16 on the frame 11 may be achieved. For another example, connection is made by magnetic attraction, and in this case, the connecting portion 161 and the adjusting portion 15 are made of materials that may achieve magnetic attraction.

Optionally, the connecting portion 161 disposed on the cover plate 16 in this embodiment may be a snap. Referring to FIG. 9 which is a top view and a bottom view of the cover plate 16 provided with a snap, the cover plate 16 may be snap-fit connected to the adjusting portion 15 via the snap, or may be snap-fit connected to the groove 14 via the snap.

In this embodiment, the cover plate 16 may further be fixedly connected to the frame 11 by other means in addition to the adjusting portion 15. For example, a third connecting portion is provided on the frame 11, and the cover plate 16 comprises a fourth connecting portion connected to the third connecting portion, the cover plate 16 is covered on the frame 11 via the third connecting portion and the fourth connecting portion. For instance, the third connecting portion and the fourth connecting portion may be hinge structures that mutually coordinate with each other, and the cover plate 16 is fixedly connected to the frame 11 via the hinge structures.

In this embodiment, the cover plate 16 preferentially covers a part of the frame 11 close to an inner side, that is, the cover plate 16 is embedded and fixed within the frame 11, thereby achieving an effect of protecting the internal components of the frame 11. In other embodiments of the present disclosure, the cover plate 16 may further cover a part of the frame 11 close to an outer side, that is, the cover plate 16 encloses the frame 11, thereby being also able to achieve a better protection effect.

In this embodiment, functions that the adjusting portion 15 may implement are not limited to limiting the cover plate 16. As may be known from the above embodiments, by using the frame 11 made of an electrically conductive metal material as an antenna pattern for communication, at the same time, by disposing the first connecting portion 12 and the second connecting portion 13 to electrically connect the frame 11 with a far-field communication device and then using the adjustment portion 15 and the cover plate 16 to protect the internal components of the frame 11 and adjust the overall impedance of the frame 11, the stability of the antenna assembly is further improved to ensure efficient and reliable operation of the antenna while simplifying the structure of the antenna assembly and enhancing a communication effect,.

Considering that the antenna assembly 10 in related arts (especially an open-structured antenna assembly 10) has low water resistance, it is prone to water accumulation during rainy days, thereby leading to corrosion and deterioration of the internal members. To enhance the water resistance of the antenna assembly 10, in this embodiment, a drain channel is further provided in an inward-outward direction in a portion of the frame 11 not covered by the cover plate 16, the drain channel is disposed along a direction of a joint seam, thereby being able to achieve an effect that there is no water accumulation internally.

In other embodiments of the present disclosure, at the joint seam between the cover plate 16 and the frame 11, waterproofing processing may further be carried out by using a dispensing process (not drawn), or using a sealing strip (not drawn) in related arts.

It is understandable that the frame 11 (i.e., the antenna) in this embodiment needs to be electrically connected to an external far-field communication device via the second connecting portion 13, and a specific disposing position of the far-field communication device may be diverse. Therefore, this embodiment is provided with wire wiring methods corresponding to different second connecting portions 13.

As shown in FIG. 10 and FIG. 11, the antenna assembly 10 further comprises a mounting portion 17 disposed on a bottom surface of the frame 11, which is equivalent to a base plate of the frame 11. The base plate is provided with at least one through hole, and the wire of the second connecting portion 13 extends out of the antenna assembly 10 via the through hole to electrically connect to the external far-field communication device. Since a hole is made on the base plate, this wiring method will not affect the safety of the internal members of the antenna assembly 10. Moreover, the open antenna assembly 10 is mostly mounted on a top of some kind of device, so a wiring method of holes on the base plate is more applicable.

In some other embodiments of the present disclosure, the external far-field communication device may not be disposed at the bottom of the antenna assembly 10, but at a position relatively horizontal to the antenna assembly 10. For this case, in this embodiment, a wire channel or a wire rail (not drawn) is provided on an inner wall of the frame 11, the wire channel is configured to accommodate the wire of the second connecting portion 13 and is used as a wiring channel, thereby the wire of the second connecting portion 13 may be electrically connected to the external far-field communication device via the wire channel. The wire channel may be configured for wiring in a horizontal direction, or wiring in a vertical direction with a certain slope. A wiring direction of the wire channel may be determined according to a specific application environment, and has greater flexibility. In some embodiments, the wire rail may be provided on the inner wall of the frame 11 in an inward-outward direction to accommodate wires. The inward-outward direction is a direction pointing from the center of the frame to an outer edge of the frame.

### Embodiment 2

The embodiments in the present application provide a vehicle roof rack.

Embodiment 2 in the present application provides a vehicle roof rack. Based on Embodiment 1, for the structure of the antenna assembly 10 that is the same as that in Embodiment 1, no more description is elaborated below, since the structure of the antenna assembly 10 has been described in detail in Embodiment 1, the content of which being included here, and the same reference numbers are adopted for the same components. A detailed description of differences from the above embodiment is provided.

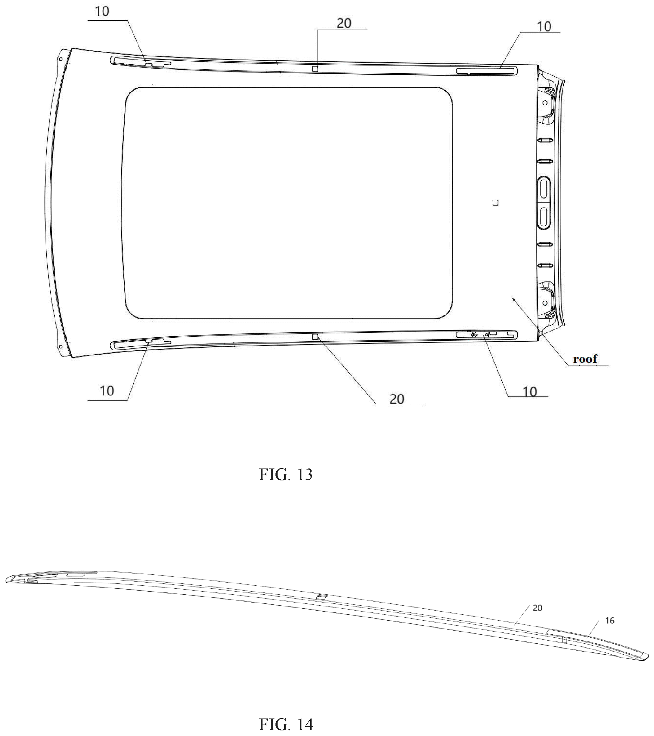

FIG. 12 is a first structural schematic diagram for a vehicle roof rack in Embodiment 2 in the present application; FIG. 13 is a second structural schematic diagram for a vehicle roof rack in Embodiment 2 in the present application; FIG. 14 is a third structural schematic diagram for a vehicle roof rack in Embodiment 2 in the present application.

As shown in FIG. 12, the antenna assembly 10 is disposed on the roof bar 20. When there are multiple antenna assemblies 10, a pair of antenna assemblies 10 are disposed at a head end and a tail end of the roof bar 20, respectively, which thereby can enhance signal reception and improve fault tolerance.

In this embodiment, the roof bar 20 may be made of a metal material that is the same as the main body of the frame 11 of the antenna assembly 10 or has similar physical properties with the main body of the frame 11 of the antenna assembly 10. For example, an aluminum alloy material is used. Meanwhile, the roof bar 20 and the antenna assembly 10 may be integrally formed from metal when connected, or be connected via welding.

In other embodiments of the present disclosure, the roof bar 20 may further be made of a non-metallic material. For example, a more lightweight and lower-cost plastic material is used, but it is subject to not affecting the communication effect of the antenna assembly 10.

In other embodiments of the present disclosure, as shown in FIG. 13, two roof bars 20 are disposed opposite to each other above the vehicle, and the head end and the tail end of each roof bar 20 are provided with one antenna assembly 10. In order to avoid mutual interference of signals, a spacing distance between two adjacent antenna assemblies 10 is greater than an antenna length of the antenna assemblies 10 (i.e., a total length of an antenna pattern formed by the frame 11), thereby being able to achieve the best communication effect.

As shown in FIG. 13, a far-field communication device electrically connected to the antenna assembly 10 may further be built in the roof bar 20, for example, in a middle position of the roof bar 20. Meanwhile, a wire channel corresponding to a wire harness connector of the antenna assembly 10 is also disposed inside the roof bar 20. Thereby, the wire of the second connecting portion 13 of the antenna assembly 10 may achieve an electrical connection between the main body of the frame 11 and the far-field communication device through the wire channel directly inside the roof bar 20, which increases integration of the vehicle roof rack and also reduces the cost at the same time.

In this embodiment, as shown in FIG. 14, the antenna assembly 10 is not only connected to the roof bar 20 in a horizontal direction, but for the purpose of the overall aesthetics and in order to have less wind resistance when driving the vehicle, the cover plate 16 of the antenna assembly 10 is also disposed to be flush with the top surface of the roof bar 20 or have a similar bending arc, so that the antenna assembly 10 conforms to an extension direction of the roof bar 20.

In addition to achieving the effect of Embodiment 1, through the vehicle roof rack in the present application, a communication effect of an external antenna of the vehicle can be achieved by the roof bar 20 connected with the antenna assembly 10, and the functional integration of the antenna and the roof rack can be increased at the same time.

### Embodiment 3

The embodiments in the present application provide a vehicle.

Embodiment 3 in the present application provides a vehicle. Based on Embodiment 2, for the structure of the vehicle roof rack that is the same as that in Embodiment 2, no more description is elaborated here, since the structure of the vehicle roof rack has been described in detail in Embodiment 2, the content of which being included here, and the same reference numbers are adopted for the same components. A detailed description of differences from the above embodiment is provided.

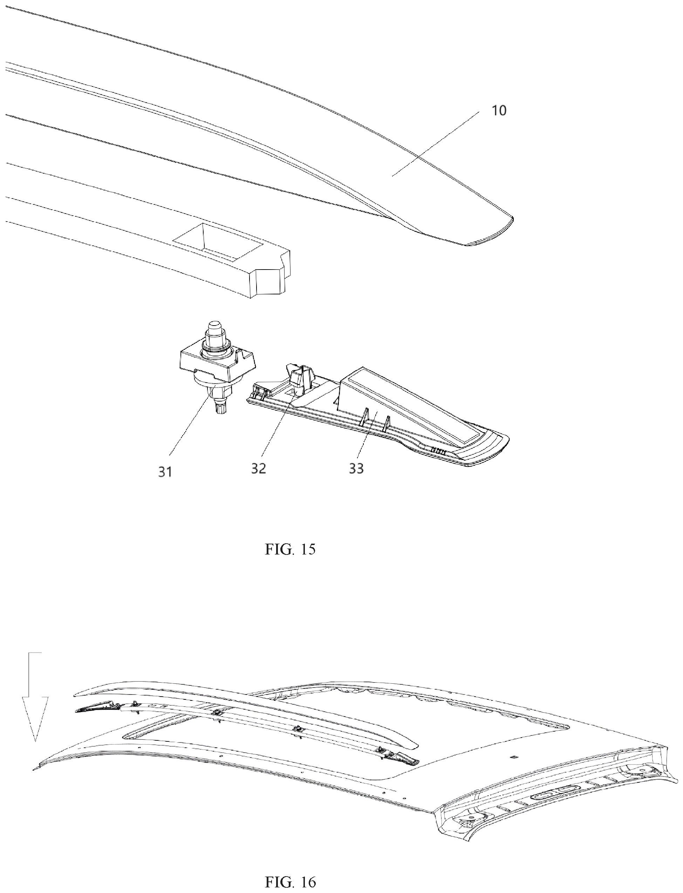

FIG. 15 and FIG. 16 are structural schematic diagrams in which a roof of a vehicle is fixedly connected to a roof rack in Embodiment 3 in the present application.

The vehicle in this embodiment may be an electric vehicle, an oil-fueled vehicle or a hybrid electric vehicle, and may further be various common vehicle types such as sedans, trucks or off-road vehicles. There are no specific restrictions on a specific type of the vehicle in this embodiment.

In this embodiment, on the top of the vehicle, connection and fixation of the vehicle roof rack and the main body of the vehicle may be achieved through various existing methods such as screwing, welding or gluing.

As shown in FIG. 15, the roof rack may be fixedly connected to the top of the vehicle by disposing a fixed nut 31, a fixed protruding portion 32 or a snap-fit portion 33.

For the vehicle in this embodiment, because there is a vehicle roof rack and the vehicle roof rack contains an antenna assembly, the vehicle in this embodiment achieves a better far-field communication effect.

The above contents are only schematic implementations of the present application and are not intended to limit the scope of the present application. An equivalent change and modification made by any person skilled in the art without deviating from the idea and principle of the present application should fall into the scope protected by the present application.

## Claims

1. An antenna assembly, **characterized in that** the antenna assembly comprises:
an antenna comprising a frame which is closed and made of an electrically conductive material;
a first connecting portion disposed on the frame; and
a second connecting portion being electrically connected to the first connecting portion by means of a wire, and being configured to connect to a far-field communication device.

2. The antenna assembly according to claim 1, **characterized in that** a groove is provided on the frame.

3. The antenna assembly according to claim 1, **characterized in that** the antenna assembly further comprises a mounting portion disposed on a bottom surface of the frame, and a through hole through which the wire is able to pass is disposed on the mounting portion.

4. The antenna assembly according to claim 1, **characterized in that** the antenna assembly further comprises a wire rail, and the wire rail is provided on an inner wall of the frame in an inward-outward direction, and the wire is housed in the wire rail.

5. The antenna assembly according to claim 1, **characterized in that** the antenna assembly further comprises at least one adjusting portion disposed on the frame and made of an electrically conductive material, so as to adjust an impedance of the frame.

6. The antenna assembly according to claim 5, **characterized in that** the adjusting portion is a boss.

7. The antenna assembly according to claim 5, **characterized in that** the antenna assembly further comprises a cover plate comprising a connecting portion that is fixedly connected to the adjusting portion and being configured to cover the frame.

8. The antenna assembly according to claim 1, **characterized in that** the antenna assembly further comprises:
a third connecting portion disposed on the frame;
a cover plate comprising a fourth connecting portion that is connected to the third connecting portion and being configured to cover the frame.

9. The antenna assembly according to claim 7 or 8, **characterized in that** the cover plate covers a portion of the frame close to an inner side.

10. The antenna assembly according to claim 1, **characterized in that** the antenna assembly further comprises a wire channel provided on an inner wall of the frame, and the wire channel is configured to accommodate the wire.

11. The antenna assembly according to claim 7, **characterized in that** the antenna assembly further comprises a drain channel being configured to be provided in an inward-outward direction in a portion of the frame not covered by the cover plate, the drain channel is disposed along a direction of a joint seam.

12. A vehicle roof rack, **characterized by** comprising a roof bar and antenna assemblies disposed on the roof bar, wherein the antenna assemblies comprise at least one antenna assembly according to any one of claims 1 to 11.

13. The vehicle roof rack according to claim 12, **characterized in that** the number of the antenna assemblies is greater than 1;
a spacing distance between two adjacent antenna assemblies is greater than a length of the frame of the antenna assemblies.

14. The vehicle roof rack according to claim 12, **characterized in that** the number of the antenna assemblies is two, and the antenna assemblies are disposed at both ends of the roof bar, respectively.

15. The vehicle roof rack according to claim 12, **characterized in that** the roof bar is made of the same electrically conductive material as the frame of the antenna assemblies, and the roof bar is integrally formed with the frame or connected to the frame by metal welding.

16. The vehicle roof rack according to claim 12, **characterized in that** a far-field communication device is built-in the roof bar, and the second connecting portions of the antenna assemblies are electrically connected to the far-field communication device.

17. A vehicle, **characterized in that** the vehicle has the vehicle roof rack according to any one of claims 12 to 16.
